# EUROPÄISCHE PATENTSCHRIFT

(11) **EP 2 481 038 B1**
(45) Veröffentlichungstag und Bekanntmachung des Hinweises auf die Patenterteilung: **31.10.2018**
(21) Anmeldenummer: 10760260.9
(22) Anmeldetag: 21.09.2010
(51) Int. Cl.: B62D 15/02, G08G 1/00, H04M 1/60, H04M 1/725

(54) **TRAGBARES KOMMUNIKATIONSGERÄT, FAHRERASSISTENZSYSTEM MIT EINEM TRAGBAREN KOMMUNIKATIONSGERÄT UND VERFAHREN ZUM UNTERSTÜTZEN EINES FAHRERS BEIM FÜHREN EINES FAHRZEUGS**
PORTABLE COMMUNICATION TOOL, DRIVER ASSISTANCE SYSTEM COMPRISING A PORTABLE COMMUNICATION TOOL, AND METHOD FOR AIDING A DRIVER WHEN OPERATING A VEHICLE
APPAREIL DE COMMUNICATION PORTATIF, SYSTÈME D'AIDE À LA CONDUITE ÉQUIPÉ D'UN TEL APPAREIL ET PROCÉDÉ D'AIDE À LA CONDUITE D'UN VÉHICULE

(30) Priorität: 25.09.2009 DE 102009048492
(43) Veröffentlichungstag der Anmeldung: 01.08.2012
(73) Patentinhaber: Valeo Schalter und Sensoren GmbH, 74321 Bietigheim-Bissingen (DE)
(72) Erfinder: REILHAC, Patrice, 73732 Esslingen (DE)
(86) Internationale Anmeldenummer: PCT/EP2010/005765
(87) Internationale Veröffentlichungsnummer: WO 2011/035879

(56) Entgegenhaltungen:
- US-A1- 2005 128 062
- US-A1- 2005 208 925
- US-A1- 2006 166 644
- US-A1- 2008 319 602

## Beschreibung

Die Erfindung betrifft ein tragbares Kommunikationsgerät mit einer Steuereinrichtung, die dazu ausgelegt ist, eine Funktion durchzuführen, die einen Fahrer beim Führen eines Fahrzeugs unterstützt. Die Erfindung bezieht sich außerdem auf ein Fahrerassistenzsystem mit einem solchen tragbaren Kommunikationsgerät, wie auch auf ein Verfahren zum Unterstützen eines Fahrers beim Führen eines Fahrzeugs mit Hilfe eines tragbaren bzw. mobilen Kommunikationsgeräts.

Es ist bekannt, tragbare Kommunikationsgeräte - wie zum Beispiel Mobiltelefone oder tragbare Personalcomputer (Personal Digital Assistant) - zum Unterstützen eines Fahrers beim Führen eines Fahrzeugs zu verwenden. Aus dem Dokument DE 10 2005 049 881 A1 ist eine Warnvorrichtung bekannt, die den Fahrer dann warnt, wenn er am Steuer einschläft oder wenn das Fahrzeug von einer Fahrbahn abkommt. Die Warnvorrichtung umfasst ein Mobiltelefon mit einer darin eingebauten Kamera zum Erfassen eines Umgebungsbereichs vor dem Fahrzeug. Das Mobiltelefon ist an einen Kommunikationsbus des Fahrzeugs angeschlossen und kann somit Daten an dem Kommunikationsbus des Fahrzeugs abgreifen. Das Mobiltelefon empfängt über den Kommunikationsbus Daten von einem Lenkeinschlagsensor, Daten über die Geschwindigkeit des Fahrzeugs, Daten über einen Betriebszustand des linken und des rechten Fahrtrichtungsanzeigers, wie auch Daten von einem Kupplungssensor. All diese Daten, die das Mobiltelefon an dem Kommunikationsbus abgreift, beinhalten Informationen über einen Fahrzustand des Fahrzeugs. Abhängig von diesen Informationen, wie auch abhängig von Bilddaten der Kamera bestimmt das Mobiltelefon die Aufmerksamkeit des Fahrers. Beispielsweise wird bei Feststellung einer schlangenlinienförmigen Fahrt des Fahrzeugs beurteilt, ob dies auf ein Einschlafen des Fahrers am Steuer zurückzuführen ist oder nicht.

Also werden im Stand der Technik Mobiltelefone zum Unterstützen eines Fahrers beim Führen eines Fahrzeugs verwendet. Der Einsatz eines Mobiltelefons zur Fahrerunterstützung ist ebenfalls aus der Druckschrift DE 10 2004 008 867 A1 bekannt. Dort dient ein Mobiltelefon zur Verarbeitung von Bilddaten eines Kamerasystems.
Um das Unterstützen des Fahrers durch ein Mobiltelefon zu ermöglichen, bedarf es häufig einer Datenkommunikation zwischen dem Mobiltelefon und einem Kommunikationsbus des Fahrzeugs, wie dies zum Beispiel im Gegenstand gemäß Druckschrift DE 10 2005 049 881 A1 der Fall ist. Dann können nämlich Daten mit Informationen über den Fahrzustand des Fahrzeugs an dem Kommunikationsbus abgegriffen und durch das Mobiltelefon verarbeitet werden. Dies belastet dann zusätzlich den Kommunikationsbus des Fahrzeugs. Manche Informationen über den Fahrzustand des Fahrzeugs werden an dem Kommunikationsbus abgegriffen, obwohl sie bereits im Mobiltelefon vorhanden sind oder durch das Mobiltelefon selbst ermittelt werden können. Dann wird der Kommunikationsbus durch das Mobiltelefon unnötig belastet.

Die Dokumente US2008/0319602 und US2005/0208925 sind Beispiele für Fahrerassistenzsysteme. Es ist Aufgabe der Erfindung, eine Lösung aufzuzeigen, wie die Funktionalität eines tragbaren Kommunikationsgerätes hinsichtlich der Unterstützung eines Fahrers beim Führen eines Fahrzeugs erweitert werden kann.

Diese Aufgabe wird erfindungsgemäß durch ein Mobiltelefon mit den Merkmalen gemäß Patentanspruch 1, wie auch durch ein Fahrerassistenzsystem mit den Merkmalen gemäß Patentanspruch 17 sowie durch ein Verfahren mit den Merkmalen gemäß Patentanspruch 18 gelöst. Vorteilhafte Ausführungen der Erfindung sind Gegenstand der abhängigen Patentansprüche und der Beschreibung.
Ein erfindungsgemäßes tragbares bzw. mobiles Kommunikationsgerät umfasst eine Steuereinrichtung, die dazu ausgelegt ist, eine Funktion durchzuführen, die einen Fahrer beim Führen eines Fahrzeugs unterstützt. Das tragbare Kommunikationsgerät umfasst einen Beschleunigungssensor, der zum Messen einer Beschleunigung des tragbaren Kommunikationsgeräts und zum Übermitteln von Messwerten für die Beschleunigung an die Steuereinrichtung ausgebildet ist. Die Steuereinrichtung ist dazu ausgebildet, abhängig von den Messwerten für die Beschleunigung die Funktion durchzuführen.
Also werden erfindungsgemäß Messwerte eines in ein tragbares Kommunikationsgerät eingebauten Beschleunigungssensors zur Unterstützung eines Fahrers beim Führen eines Fahrzeugs verwendet. Die Erfindung macht sich die Tatsache zunutze, dass bestimmte, auf dem Markt erhältliche tragbare Kommunikationsgeräte - wie zum Beispiel Mobiltelefone - bereits über einen eingebauten Beschleunigungssensor verfügen. Die Erfindung geht nun den Weg, auf der Basis der Messwerte des Beschleunigungssensors eine Funktion durchzuführen, die den Fahrer beim Führen eines Fahrzeugs unterstützt. Unter dem Durchführen einer Funktion wird vorliegend insbesondere das Bereitstellen einer Funktion durch die Steuereinrichtung des Kommunikationsgeräts und/oder das Ermöglichen der Bereitstellung der Funktion verstanden, nämlich zum Beispiel durch Ansteuerung einer Komponente des Fahrzeugs durch die Steuereinrichtung des tragbaren Kommunikationsgeräts.

Das erfindungsgemäße tragbare Kommunikationsgerät hat den Vorteil, dass Informationen über die Beschleunigung des Fahrzeugs sowie Informationen über einen aus der Beschleunigung ermittelbaren Fahrzustand des Fahrzeugs nicht an einem Kommunikationsbus des Fahrzeugs abgegriffen werden müssen. Die Steuereinrichtung empfängt die Messwerte für die Beschleunigung unmittelbar von dem Beschleunigungssensor und kann abhängig von den Messwerten den Fahrer beim Führen des Fahrzeugs unterstützen. Die erfindungsgemäße Vorgehensweise ermöglicht zum Beispiel die Ermittlung verschiedenster Fahrzustände des Fahrzeugs, nämlich unter Verwendung der Messwerte des Beschleunigungssensors. Und zwar ermöglicht die erfindungsgemäße Vorgehensweise beispielsweise die Feststellung, ob der Fahrer mit seinem Fahrzeug durch eine Linkskurve oder auch eine Rechtskurve fährt. Als weiteres Beispiel sei hier die Möglichkeit erwähnt, anhand der Messwerte des Beschleunigungssensors einen Verlauf einer durch das Fahrzeug zurückgelegten Fahrbahn zu bestimmen. Vorzugsweise ist das tragbare Kommunikationsgerät ein Mobiltelefon oder ein tragbarer Personalcomputer (Personal Digital Assistant). Wie bereits ausgeführt, verfügen derartige Kommunikationsgeräte üblicherweise über Beschleunigungssensoren, die zum Zwecke der Bestimmung der Orientierung des Gerätes im Raum eingesetzt werden. Solche Kommunikationsgeräte können nun zum Beispiel mit einem entsprechenden Computerprogramm aufgerüstet werden, so dass beim Ausführen des Computerprogramms die Steuereinrichtung die Messwerte des Beschleunigungssensors verarbeitet und hierdurch den Fahrer beim Führen des Fahrzeugs unterstützt.

Der Beschleunigungssensor ist bevorzugt ein dreidimensionaler Beschleunigungssensor. Dies bedeutet, dass mit dem Beschleunigungssensor die Beschleunigung des tragbaren Kommunikationsgeräts in alle drei Richtungen eines kartesischen Koordinatensystems gemessen werden kann. Somit ist die Verteilung der Beschleunigungskräfte im Koordinatensystem bekannt. Die Steuereinrichtung des tragbaren Kommunikationsgeräts kann somit bevorzugt nicht nur eine Beschleunigung des Fahrzeugs nach vorne oder eine Verzögerung des Fahrzeugs erfassen, sondern auch eine Querbeschleunigung und/oder eine Beschleunigung in vertikaler Richtung.

Die Steuereinrichtung des tragbaren Kommunikationsgeräts kann auf der Basis der Messwerte des Beschleunigungssensors unterschiedlichste Funktionen durchführen, die den Fahrer beim Führen des Fahrzeugs unterstützen. Zum Beispiel kann die Steuereinrichtung abhängig von den Messwerten des Beschleunigungssensors ein Fahrverhalten des Fahrers bestimmen und den Fahrer über sein Fahrverhalten informieren. Dies kann zum Beispiel so aussehen, dass in der Steuereinrichtung eine Vielzahl von vorbestimmten Wertebereichen abgelegt sind und die Steuereinrichtung überprüft, in welchen der vorbestimmten Wertebereiche die jeweils momentanen Messwerte des Beschleunigungssensors fallen. Jeder Wertebereich kann dann einem bestimmten Fahrverhalten des Fahrers zugeordnet sein; relativ kleine Messwerte des Beschleunigungssensors können zum Beispiel einem "ökonomischen" Fahrverhalten zugeordnet sein, während mittlere Messwerte einem "normalen" Fahrverhalten und relativ hohe Messwerte einem "sportlichen" Fahrverhalten zugeordnet sein können. Der Fahrer kann durch die Steuereinrichtung über sein Fahrverhalten informiert werden und er kann sein Fahrverhalten anpassen bzw. verändern. Er kann dabei zum Beispiel den Kraftstoffverbrauch berücksichtigen, der üblicherweise von dem Fahrverhalten eines Fahrers abhängt.

Prinzipiell kann die Steuereinrichtung den Fahrer über sein Fahrverhalten auf unterschiedliche Arten informieren. Zum Beispiel kann die Steuereinrichtung den Fahrer über sein Fahrverhalten auf akustischem Wege informieren, nämlich unter Ausgabe entsprechender akustischer Signale, die das Fahrverhalten des Fahrers charakterisieren. Es hat sich als besonders vorteilhaft herausgestellt, wenn die Steuereinrichtung abhängig von dem Fahrverhalten des Fahrers die Farbgebung einer Beleuchtung, insbesondere einer Hintergrundbeleuchtung, einer Anzeigeeinrichtung des tragbaren Kommunikationsgeräts verändert. Dem "ökonomischen" Fahrverhalten kann dabei eine grüne Beleuchtung zugeordnet sein, während dem "normalen" Fahrverhalten eine blaue Beleuchtung und dem "sportlichen" Fahrverhalten eine rote Beleuchtung der Anzeigeeinrichtung zugeordnet sein können. Somit kann der Fahrer unmittelbar anhand der Farbgebung der Anzeigeeinrichtung erkennen, wie sein aktuelles Fahrverhalten ist bzw. ob sein aktuelles Fahrverhalten richtig ist oder nicht. Gemäß einer Funktion kann also die Steuereinrichtung den Fahrer über sein Fahrverhalten informieren.

Bei der Bestimmung des Fahrverhaltens kann die Steuereinrichtung die gemessene Beschleunigung auch über eine vorbestimmte Zeitdauer auswerten und abhängig von dieser Auswertung den Fahrer über sein Fahrverhalten entsprechend informieren. Zum Beispiel kann die Beschleunigung über eine vorbestimmte Zeitdauer gemittelt werden. Dann kann die Steuereinrichtung überprüfen, in welchen Wertebereich die gemittelte Beschleunigung fällt. Somit wird erreicht, dass die Farbgebung der Beleuchtung nicht ständig verändert und/oder der Fahrer anderweitig über einen häufigen Wechsel seines Fahrverhaltens nicht zu oft informiert werden muss.

Vor dem Durchführen einer Funktion, mit welcher der Fahrer beim Führen des Fahrzeugs unterstützt wird, kann eine Kalibrierung des tragbaren Kommunikationsgeräts durchgeführt werden. Die Steuereinrichtung kann zum Beispiel eine Eingabe des Fahrers empfangen, über welche der Steuereinrichtung eine Information über die aktuelle Orientierung des tragbaren Kommunikationsgeräts im Fahrzeug übermittelt wird. Dies kann zum Beispiel so aussehen, dass der Fahrer das tragbare Kommunikationsgerät zunächst in Fahrzeuglängsrichtung - so dass die Längsrichtung des tragbaren Kommunikationsgeräts mit der Fahrzeuglängsrichtung zusammenfällt - platziert und dann eine Eingabe an dem tragbaren Kommunikationsgerät - zum Beispiel durch Betätigen eines Bedienelements - vornimmt, über welche die Steuereinrichtung über die Orientierung des tragbaren Kommunikationsgeräts in Fahrzeuglängsrichtung informiert wird. Ergänzend oder alternativ kann vorgesehen sein, dass das Durchführen der Funktion durch die Steuereinrichtung nur dann freigegeben wird, wenn das tragbare Kommunikationsgerät an einer Halterung - zum Beispiel an der Windschutzscheibe des Fahrzeugs - befestigt wird. Dann ist nämlich sichergestellt, dass die Orientierung des tragbaren Kommunikationsgeräts im Fahrzeug vorgegeben und somit bekannt ist. Es hat sich jedoch als besonders vorteilhaft erwiesen, wenn die Steuereinrichtung dazu ausgelegt ist, selbst eine Orientierung des tragbaren Kommunikationsgeräts im Raum auf der Basis der Messwerte des Beschleunigungssensors zu bestimmen und sich somit selbst zu kalibrieren.

Eine durch die Steuereinrichtung auf der Basis der Messwerte des Beschleunigungssensors durchführbare Funktion zur Fahrerunterstützung kann eine Unfallerkennung sein. Die Steuereinrichtung kann eine Kommunikationsverbindung zwischen dem tragbaren Kommunikationsgerät und einer Notrufzentrale dann herstellen, wenn ein auf die Messwerte des Beschleunigungssensors bezogenes vorbestimmtes Notrufkriterium erfüllt ist. Das vorbestimmte Notrufkriterium kann dabei beinhalten, dass zumindest ein Messwert des Beschleunigungssensors einen vorbestimmten Grenzwert überschreitet und/oder die gemessene Beschleunigung eine vorbestimmte Änderung durchläuft bzw. eine vorbestimmte Charakteristik aufweist. Überschreitet ein Messwert des Beschleunigungssensors betragsmäßig einen Grenzwert und/oder durchläuft die Beschleunigung eine vorbestimmte Änderung, so kann dies nämlich ein Zeichen dafür sein, dass ein Unfall stattfindet oder stattzufinden droht. Die vorbestimmte Änderung bzw. die Charakteristik der Beschleunigung kann zum Beispiel einen Sprung umfassen - dann umfasst das Notrufkriterium, dass ein Messwert der Beschleunigung betragsmäßig sehr groß ist bzw. einen Grenzwert überschreitet und ein nachfolgender Messwert der Beschleunigung sehr klein ist, insbesondere Null beträgt. Das Notrufkriterium kann ergänzend oder alternativ beinhalten, dass sich das tragbare Kommunikationsgerät und somit auch das Fahrzeug nach Durchlaufen einer vorbestimmten Änderung - insbesondere einer sprunghaften Änderung - durch die Beschleunigung nicht mehr bewegt. Eine solche Information kann zum Beispiel anhand von Messwerten des Beschleunigungssensors und/oder von Daten eines Navigationssystems gewonnen werden. Ergänzend oder alternativ kann das vorbestimmte Notrufkriterium beinhalten, dass das tragbare Kommunikationsgerät eine vorbestimmte Orientierung im Raum aufweist - was anhand der Messwerte des Beschleunigungssensors ermittelt werden kann. Zur Erkennung eines Unfalls kann die Steuereinrichtung auch weitere Fahrzeugdaten dann berücksichtigen, wenn das tragbare Kommunikationsgerät Daten an einem Kommunikationsbus des Fahrzeugs abgreifen kann, nämlich über eine entsprechende Kommunikationsschnittstelle. Dann kann die Steuereinrichtung zum Beispiel Daten eines Luftsack(airbag)-Steuergeräts berücksichtigen. Durch die Herstellung der Kommunikationsverbindung zwischen dem tragbaren Kommunikationsgerät und einer Notrufzentrale wird dem Fahrer die Möglichkeit gegeben, jemanden sehr schnell über den Unfall zu informieren. Ergänzend oder alternativ kann die Steuereinrichtung Daten an die Notrufzentrale übertragen, so dass die Notrufzentrale quasi automatisch durch das tragbare Kommunikationsgerät über den Unfall informiert wird.

Eine durch die Steuereinrichtung auf der Basis der Messwerte des Beschleunigungssensors durchführbare Funktion kann eine Beladungserkennung des Fahrzeugs sein. Die Steuereinrichtung kann bei dieser Ausführungsform abhängig von den Messwerten des Beschleunigungssensors eine Beladung des Fahrzeugs und/oder eine Verteilung der Beladung im Fahrzeug bestimmen und den Fahrer über die Beladung und/oder über die Verteilung der Beladung informieren. Kann das tragbare Kommunikationsgerät Daten an einem Kommunikationsbus des Fahrzeugs abgreifen, so kann die Steuereinrichtung bei der Bestimmung der Beladung und/oder der Verteilung der Beladung im Fahrzeug auch weitere fahrzeugspezifische Informationen berücksichtigen, nämlich insbesondere einen Lenkwinkel und/oder einen Federweg eines Stoßdämpfers des Fahrzeugs. Abhängig von dem Verhalten des Fahrzeugs bei einer Kurvenfahrt und/oder abhängig von einer Verteilung der Beschleunigungskräfte - insbesondere von einer Beschleunigung in vertikaler Richtung - lässt sich nämlich die Beladung des Fahrzeugs und/oder die Verteilung der Beladung im Fahrzeug bestimmen. Die Steuereinrichtung kann zur Bestimmung der Beladung und/oder der Verteilung der Beladung im Fahrzeug bei einem unbeladenen Fahrzeug gemessene Messwerte für die Beschleunigung berücksichtigen. Solche Messwerte, wie auch gegebenenfalls das Gewicht eines unbeladenen Fahrzeugs, können in der Steuereinrichtung des tragbaren Kommunikationsgeräts abgelegt sein, nämlich in einem Speicher. Diese Ausführungsform hat den Vorteil, dass der Fahrer sein Fahrverhalten an die jeweils aktuelle Beladung und/oder Verteilung der Beladung im Fahrzeug anpassen kann. Die Steuereinrichtung kann den Fahrer auch darüber informieren, wie die aktuelle Beladung und/oder die aktuelle Verteilung der Beladung im Fahrzeug die Durchführung unterschiedlicher Fahrmanöver beeinflusst. Zum Beispiel kann die Steuereinrichtung ein Warnsignal dann ausgeben, wenn die Ladung im Fahrzeug ungünstig verteilt bzw. positioniert ist und das Durchführen eines bestimmten Fahrmanövers eine Gefahr darstellen könnte.

Auf der Basis der Messwerte des Beschleunigungssensors kann die Steuereinrichtung einen Konzentrationsgrad des Fahrers bestimmen. Die Steuereinrichtung kann den Fahrer dann über den Konzentrationsgrad informieren und/oder die Steuereinrichtung kann den Fahrer dann warnen, wenn sein Konzentrationsgrad einen vorbestimmten Grad unterschreitet bzw. wenn die Aufmerksamkeit des Fahrers nachlässt. Also bestimmt die Steuereinrichtung bei dieser Ausführungsform den Grad der Aufmerksamkeit des Fahrers abhängig von der gemessenen Beschleunigung. Dies kann zum Beispiel so aussehen, dass die Steuereinrichtung abhängig von den Messwerten des Beschleunigungssensors einen Verlauf einer durch das Fahrzeug zurückgelegten Fahrbahn ermittelt und abhängig von diesem Verlauf den Konzentrationsgrad bestimmt. Gleichfalls kann die Steuereinrichtung auf diesem Wege einen Alkoholtest durchführen und den Fahrer dann warnen, wenn auf der Basis der Messwerte des Beschleunigungssensors ein ungewöhnliches Fahrverhalten des Fahrers festgestellt wird. Im Falle, dass die Konzentration des Fahrers nachlässt bzw. ein ungewöhnliches Fahrverhalten des Fahrers festgestellt wird, kann die Steuereinrichtung eine Kommunikationsverbindung zwischen dem tragbaren Kommunikationsgerät und einer Notrufzentrale herstellen und Daten an die Notrufzentrale übertragen. Dann wird die Notrufzentrale über eine potentielle Gefahr auf der Straße informiert.

Eine auf der Basis der Messwerte des Beschleunigungssensors durch die Steuereinrichtung durchführbare Funktion kann eine Geschwindigkeitsmessung sein. Und zwar kann die Steuereinrichtung abhängig von den Messwerten des Beschleunigungssensors eine Geschwindigkeit des tragbaren Kommunikationsgeräts und somit des Fahrzeugs bestimmen. Diese Ausführungsform erweist sich insbesondere bei Durchfahrten durch Tunnels als besonders vorteilhaft. Dann sind nämlich keine Navigationsdaten für ein gegebenenfalls im tragbaren Kommunikationsgerät vorhandenes Navigationssystem vorhanden. Das Navigationssystem des tragbaren Kommunikationsgeräts kann bei dieser Ausführungsform die auf der Basis der Messwerte des Beschleunigungssensors ermittelten Geschwindigkeitswerte verwenden und dem Fahrer ununterbrochen Navigationshinweise bereitstellen. Die Steuereinrichtung kann auch die jeweils augenblickliche globale Position des tragbaren Kommunikationsgeräts bestimmen, nämlich abhängig von den Messwerten des Beschleunigungssensors und/oder von Messwerten eines Kompasses des tragbaren Kommunikationsgeräts. Auch diese Ausführungsform erweist sich bei Durchfahrten durch Tunnels als besonders vorteilhaft; die Steuereinrichtung kennt nämlich die globale Position des Fahrzeugs auch dann, wenn keine Daten des Navigationssystems vorhanden sind. Somit kann die Position des Fahrzeugs auch in Tunnels durch die Steuereinrichtung verfolgt werden.

Eine anhand der Messwerte des Beschleunigungssensors durch die Steuereinrichtung durchführbare Funktion kann eine Erkennung eines bevorstehenden Parkvorgangs des Fahrzeugs sein. Dann kann die Steuereinrichtung abhängig von den Messwerten des Beschleunigungssensors einen bevorstehenden Parkvorgang des Fahrzeugs erkennen und nach Erkennen eines bevorstehenden Parkvorgangs den Fahrer beim Durchführen des Parkvorgangs unterstützen. Bei dieser Ausführungsform kann das tragbare Kommunikationsgerät eine Kommunikationsschnittstelle aufweisen, über welche die Steuereinrichtung Steuerdaten unmittelbar oder unter Vermittlung eines Kommunikationsbusses des Fahrzeugs an eine Komponente des Fahrzeugs senden und/oder Daten unmittelbar oder unter Vermittlung des Kommunikationsbusses von einer Komponente des Fahrzeugs empfangen kann. Zum Beispiel kann die Steuereinrichtung bei dieser Ausführungsform Ultraschalldaten eines Ultraschallsensors und/oder Bilddaten einer Kamera und/oder Radardaten eines Radargeräts empfangen und den Fahrer abhängig von einer Verarbeitung der Ultraschalldaten und/oder der Bilddaten und/oder der Radardaten beim Durchführen des Parkvorgangs unterstützen. Die Steuereinrichtung kann abhängig von den Ultraschalldaten und/oder den Bilddaten und/oder den Radardaten eine Parkbahn berechnen, entlang welcher das Fahrzeug in eine Parklücke eingeparkt werden kann. Dann kann die Steuereinrichtung Steuerdaten unmittelbar oder unter Vermittlung eines Kommunikationsbusses des Fahrzeugs an eine Lenkvorrichtung senden und somit die Lenkung der lenkbaren Räder des Fahrzeugs gemäß der berechneten Parkbahn steuern. Ergänzend oder alternativ kann die Steuereinrichtung auch Bilder auf einer Anzeigeeinrichtung des tragbaren Kommunikationsgeräts anzeigen, die auf den empfangenen Ultraschalldaten und/oder den Bilddaten und/oder den Radardaten beruhen. Zum Beispiel kann die Steuereinrichtung auf der Anzeigeeinrichtung Bilder über die Umgebung des Fahrzeugs anzeigen. Selbiges kann die Steuereinrichtung auch auf einer fahrzeuginternen Anzeigeeinrichtung anzeigen, nämlich unter Ausgabe entsprechender Steuerdaten. Die Steuereinrichtung kann anhand der Messwerte des Beschleunigungssensors eine Fahrtrichtung des Fahrzeugs erkennen und abhängig von der erkannten Fahrtrichtung eine Fahrbahn extrapolieren, entlang welcher das Fahrzeug mit höchster Wahrscheinlichkeit gefahren wird. Die Steuereinrichtung kann auf der Anzeigeeinrichtung des tragbaren Kommunikationsgeräts und/oder auf einer fahrzeuginternen Anzeigeeinrichtung dann die extrapolierte Fahrbahn anzeigen, wie auch Bilder über die Umgebung des Fahrzeugs.

Das tragbare Kommunikationsgerät kann eine Kommunikationsschnittstelle zur drahtlosen Datenübertragung aufweisen. Dann kann die Steuereinrichtung Daten mit Messwerten des Beschleunigungssensors über die Kommunikationsschnittstelle senden. Ergänzend oder alternativ kann die Steuereinrichtung über die Kommunikationsschnittstelle Daten mit Informationen über ein anhand der Messwerte des Beschleunigungssensors ermitteltes Fahrverhalten des Fahrers senden. Somit können Geräte anderer Fahrzeuge diese Daten empfangen und zum Beispiel eine drohende Gefahr erkennen; Fahrer anderer Fahrzeuge können somit über jegliche Gefahren informiert werden. Die Steuereinrichtung kann auch zum Empfangen von Daten von Geräten anderer Fahrzeuge - nämlich über die Kommunikationsschnittstelle des tragbaren Kommunikationsgeräts - ausgebildet sein. Dann kann die Steuereinrichtung den Fahrer vor jeglichen Gefahren warnen, die anhand der empfangenen Daten festgestellt werden. Die Kommunikationsschnittstelle kann zum Beispiel zur drahtlosen Datenübertragung gemäß einem Standard der IEEE-802.11-Familie (Wireless Local Area Network) und/oder gemäß einem Standard der IEEE-802-15-Familie (Bluetooth) ausgebildet sein. Tragbare Kommunikationsgeräte - wie insbesondere Mobiltelefone - verfügen üblicherweise bereits über solche Kommunikationsschnittstellen, die zur Übertragung von Daten gemäß einem Standard der oben genannten Familien geeignet sind.

Bevorzugt umfasst das tragbare Kommunikationsgerät ein Navigationssystem, insbesondere mit einem GPS (Global Positioning System)-Empfänger und/oder einem Galileo-Empfänger. Dann kann die Steuereinrichtung auch unter Berücksichtigung von Daten des Navigationssystems eine Funktion durchführen, die den Fahrer beim Führen des Fahrzeugs unterstützt. Zum Beispiel kann die Steuereinrichtung den Fahrer dann warnen, wenn sie abhängig von den Daten des Navigationssystems und/oder den Messwerten des Beschleunigungssensors ein bevorstehendes oder ein bereits erfolgtes Verlassen einer Spur erkennt. Durch die Verwendung von Daten des Navigationssystems zur Fahrerunterstützung wird die Funktionalität des tragbaren Kommunikationsgeräts weiterhin erweitert.

Die Funktionalität des tragbaren Kommunikationsgeräts wird in einer Ausführungsform durch einen Kompass erweitert. Das tragbare Kommunikationsgerät kann nämlich einen Kompass umfassen, und die Steuereinrichtung kann auch unter Berücksichtigung von Messwerten des Kompasses eine Funktion durchführen, die den Fahrer beim Führen des Fahrzeugs unterstützt. Anhand von Messwerten eines Kompasses gelingt es nämlich, die Änderung der Fahrtrichtung des Fahrzeugs zu erkennen; es ist auch möglich, einen Verlauf einer durch das Fahrzeug zurückgelegten Fahrbahn zu ermitteln. Anhand der Messwerte des Kompasses kann die Steuereinrichtung eine bereits abhängig von den Messwerten des Beschleunigungssensors ermittelte Größe - zum Beispiel ein Fahrverhalten des Fahrers - plausibilisieren. Zum Beispiel kann die Steuereinrichtung überprüfen, ob ein anhand der Messwerte des Beschleunigungssensors ermitteltes Fahrverhalten des Fahrers mit einem anhand der Messwerte des Kompasses ermittelten Fahrverhaltens übereinstimmt.

Eine durch die Steuereinrichtung anhand der Messwerte des Beschleunigungssensors durchführbare Funktion kann eine Erkennung eines Zustands einer Straße sein. Und zwar kann die Steuereinrichtung abhängig von den Messwerten des Beschleunigungssensors auf einen Zustand einer Straße zurückschließen, auf welcher das Fahrzeug gefahren wird. Insbesondere kann die Steuereinrichtung abhängig von den Messwerten des Beschleunigungssensors einen Reibungskoeffizienten ermitteln, welcher dann den Zustand der Straße charakterisiert. Die Steuereinrichtung kann den Fahrer über den Zustand der Straße informieren. Dies kann zum Beispiel so aussehen, dass eine Vielzahl von vorbestimmten möglichen Zuständen in der Steuereinrichtung abgelegt sind, nämlich beispielsweise "Eis" und/oder "Schnee" und/oder "Sand" und/oder "Regen" und/oder "guter Straßenzustand". Bei der Ermittlung des Zustands der Straße kann die Steuereinrichtung auch weitere fahrzeugspezifische Informationen berücksichtigen, die das tragbare Kommunikationsgerät an einem Kommunikationsbus des Fahrzeugs abgreifen kann. Und zwar kann die Steuereinrichtung an dem Kommunikationsbus eine Information über eine Motordrehzahl und/oder über einen Pedalweg eines Gaspedals abgreifen und zur Bestimmung des Zustands der Straße heranziehen. In einer Verwirklichung dieser Ausführungsform kann die Steuereinrichtung aus den am Kommunikationsbus abgegriffenen Informationen einen Sollwert der Beschleunigung des Fahrzeugs berechnen und die Messwerte des Beschleunigungssensors mit dem berechneten Sollwert vergleichen. Abhängig von einem Ergebnis des Vergleichs kann die Steuereinrichtung dann auf den Zustand der Straße zurückschließen. Bei dieser Ausführungsform kann der Fahrer also über die tatsächlichen Straßenbedingungen informiert werden, und er kann sein Fahrverhalten an die herrschenden Straßenbedingungen anpassen. Es ist auch sinnvoll möglich, dass die Steuereinrichtung Daten mit Informationen über den Zustand der Straße über eine Kommunikationsschnittstelle des tragbaren Kommunikationsgeräts an Geräte anderer Fahrzeuge und/oder an eine externe Datenverarbeitungsvorrichtung - hier vorzugsweise mobilfunkkonform - und/oder an eine Notrufzentrale sendet.

Wie bereits ausgeführt, kann das tragbare Kommunikationsgerät eine Kommunikationsschnittstelle, insbesondere zur drahtlosen Datenübertragung, aufweisen. Diese Kommunikationsschnittstelle kann zur drahtlosen Datenübertragung gemäß einem Standard der oben bereits genannten Familien ausgebildet sein. Die Steuereinrichtung kann dann über die Kommunikationsschnittstelle Steuerdaten an ein fahrzeuginternes Datenübertragungssystem, zum Beispiel an einen Kommunikationsbus, und/oder unmittelbar an zumindest eine Komponente des Fahrzeugs senden und/oder Informationen von dem fahrzeuginternen Datenübertragungssystem und/oder unmittelbar von zumindest einer Komponente des Fahrzeugs empfangen. Ergänzend oder alternativ kann das tragbare Kommunikationsgerät über die Kommunikationsschnittstelle mit Hilfe einer drahtgebundenen Verbindung mit dem fahrzeuginternen Datenübertragungssystem gekoppelt werden, so dass die Steuereinrichtung des tragbaren Kommunikationsgeräts Daten an dem fahrzeuginternen Datenübertragungssystem abgreifen und/oder Daten an das Datenübertragungssystem senden kann. Durch Einsatz der Kommunikationsschnittstelle wird die Funktionalität des tragbaren Kommunikationsgeräts weiterhin erweitert, die Steuereinrichtung kann nämlich Daten von verschiedensten Komponenten des Fahrzeugs empfangen und/oder Daten an unterschiedliche Komponenten des Fahrzeugs senden. Zum Beispiel kann der Fahrer sein Fahrzeug mit unterschiedlichen Nachrüstkomponenten aufrüsten, die mit entsprechenden Kommunikationsschnittstellen ausgestattet sind. Dann kann die Steuereinrichtung mit solchen Nachrüstkomponenten im Fahrzeug kommunizieren, so dass das fahrzeuginterne Datenübertragungssystem nicht belastet wird. Das tragbare Kommunikationsgerät kann unter Zusammenwirkung mit den Nachrüstkomponenten ein separates Fahrerassistenzsystem bilden, welches zum Beispiel von einem im Fahrzeug bereits werkseitig vorhandenen Fahrerassistenzsystem unabhängig ist. Dann stellt die Steuereinrichtung des tragbaren Kommunikationsgeräts eine zentrale Steuereinrichtung eines derart gebildeten Fahrerassistenzsystems dar.

Es ist auch sinnvoll möglich, dass die im Fahrzeug bereits werkseitig vorhandenen Komponenten - zum Beispiel Sensoreinrichtungen und/oder Steuergeräte - mit einer entsprechenden Kommunikationsschnittstelle aufgerüstet werden, so dass das tragbare Kommunikationsgerät mit diesen Komponenten unmittelbar kommunizieren kann.

Eine durch die Steuereinrichtung anhand der Messwerte des Beschleunigungssensors durchführbare Funktion kann die Ansteuerung einer Beleuchtungseinrichtung des Fahrzeugs sein, die in das Fahrzeug als Nachrüstkomponente nachträglich oder bereits werkseitig eingebaut wurde. Die Steuereinrichtung kann abhängig von den Messwerten des Beschleunigungssensors Steuerdaten erzeugen und unmittelbar und/oder unter Vermittlung des fahrzeuginternen Datenübertragungssystems an die Beleuchtungseinrichtung des Fahrzeugs senden und hierdurch die Beleuchtungseinrichtung ansteuern. Auf diesem Weg kann die Steuereinrichtung des tragbaren Kommunikationsgeräts zum Beispiel bei einer Kurvenfahrt die Leuchtrichtung der Beleuchtungseinrichtung in Kurvenrichtung verändern, so dass die Fahrsicherheit bei einer Kurvenfahrt - insbesondere bei Nacht - durch ein verbessertes Sichtfeld erhöht werden kann. Umfasst das Fahrzeug zum Beispiel zwei Nebelscheinwerfer - einen linken und rechten Nebenscheinwerfer - so kann die Steuereinrichtung bei einer Kurvenfahrt nach rechts den rechten Nebelscheinwerfer und bei Durchfahren einer Linskurve den linken Nebelscheinwerfer aktivieren. Solche Nebelscheinwerfer können entweder Nachrüstkomponenten des Fahrzeugs oder bereits werkseitig im Fahrzeug vorhandene Komponenten sein. Ergänzend oder alternativ kann die Steuereinrichtung abhängig von den Messwerten des Beschleunigungssensors auch die - insbesondere vertikale - Position einer Hell-Dunkel-Grenze eines durch die Beleuchtungseinrichtung erzeugten Lichts einstellen. Dies beruht auf der Tatsache, dass sich bei unterschiedlichen Werten der Beschleunigung des Fahrzeugs auch unterschiedliche Positionen der Hell-Dunkel-Grenze ergeben, nämlich aufgrund unterschiedlicher Verteilung von Kräften auf die Stoßdämpfer des Fahrzeugs.

In einer Ausführungsform kann die Steuereinrichtung abhängig von den Messwerten des Beschleunigungssensors erzeugte Steuerdaten unmittelbar und/oder unter Vermittlung des fahrzeuginternen Datenübertragungssystems an eine Anzeigeeinrichtung des Fahrzeugs senden und hierdurch die Anzeigeeinrichtung ansteuern. Die Anzeigeeinrichtung kann eine im Fahrzeug bereits werkseitig vorhandene Komponente oder ein Nachrüstkomponente sein, mit welcher das Fahrzeug nachträglich aufgerüstet wurde. Bei dieser Ausführungsform kann die Steuereinrichtung anhand der Messwerte des Beschleunigungssensors erkennen, ob das Fahrzeug nach rechts oder nach links sowie vorwärts oder rückwärts gefahren wird. Abhängig davon kann die Steuereinrichtung Steuerdaten an die Anzeigeeinrichtung übertragen, in deren Abhängigkeit zwischen Bildern unterschiedlicher, an der Fahrzeugkarosserie montierter Kameras umgeschaltet wird. Abhängig von der Fahrtrichtung können somit Bilder über unterschiedliche Umgebungsbereiche des Fahrzeugs auf der Anzeigeeinrichtung angezeigt werden. Die Steuereinrichtung kann auch selbst Bilddaten zumindest einer Kamera des Fahrzeugs empfangen und sie verarbeiten. Zum Beispiel kann die Steuereinrichtung auf einem Display des tragbaren Kommunikationsgeräts abhängig von der anhand der Messwerte des Beschleunigungssensors erkannten Fahrtrichtung jeweils Bilder unterschiedlicher Kameras anzeigen. Wird das Fahrzeug rückwärts gefahren, so kann die Steuereinrichtung auf dem Display des tragbaren Kommunikationsgeräts und/oder auf der fahrzeuginternen Anzeigeeinrichtung Bilder über einen Umgebungsbereich hinter dem Fahrzeug anzeigen. Dieser Umgebungsbereich kann zum Beispiel mit Hilfe einer am Heck des Fahrzeugs montierten Kamera erfasst werden. In einer Ausführungsform - insbesondere beim Durchführen eines Parkvorgangs - kann die Steuereinrichtung den Fahrer derart unterstützen, dass sie anhand der Messwerte des Beschleunigungssensors eine Fahrbahn extrapoliert, die durch das Fahrzeug befahren wird. Die extrapolierte Fahrbahn kann die Steuereinrichtung auf dem Display des tragbaren Kommunikationsgeräts und/oder auf der fahrzeuginternen Anzeigeeinrichtung anzeigen. Auf diesem Wege wird der Fahrer darüber informiert, über welchen Weg das Fahrzeug bei den augenblicklich vorhandenen Einstellungen gefahren wird.

Eine durch die Steuereinrichtung anhand der Messwerte des Beschleunigungssensors durchführbare Funktion kann die Ansteuerung einer Kamera und/oder eines Ultraschallsensors und/oder eines Radargeräts des Fahrzeugs sein. Die Kamera und/oder der Ultraschallsensor und/oder das Radargerät können entweder Nachrüstkomponenten oder werkseitig im Fahrzeug vorhandene Komponenten sein. Die Steuereinrichtung kann abhängig von den Messwerten des Beschleunigungssensors erzeugte Steuerdaten unmittelbar und/oder unter Vermittlung des fahrzeuginternen Datenübertragungssystems an die Kamera des Fahrzeugs - insbesondere an eine hinter einer Windschutzscheibe platzierte Frontkamera - senden und hierdurch die Kamera ansteuern. Diese Ansteuerung kann zum Beispiel so aussehen, dass die Kamera bei einer Kurvenfahrt nach rechts einen rechten Bereich und bei einer Kurvenfahrt nach links einen linken Bereich ihres Gesamterfassungsbereichs aufnimmt. Dabei wird die Tatsache zu nutze gemacht, dass die Steuereinrichtung anhand der Messwerte des Beschleunigungssensors die Kurvenrichtung feststellen kann. Erkennt die Steuereinrichtung, dass das Fahrzeug beschleunigt wird, so kann sie solche Steuerdaten an die Kamera übertragen, die eine Zoom-Funktion der Kamera aktivieren. Und zwar kann die Kamera dann einzoomen, wenn das Fahrzeug beschleunigt wird; die Kamera kann dann auszoomen, wenn das Fahrzeug verzögert wird. Eine solche Zoom-Funktion kann die Steuereinrichtung gleichfalls unter Ansteuerung einer Anzeigeeinrichtung durchführen, sie kann solche Steuerdaten an die Anzeigeeinrichtung übertragen, die dann eine vergrößerte Darstellung eines Bereichs eines durch eine Kamera aufgenommenen Bildes bewirken. Entsprechend kann die Steuereinrichtung abhängig von den Messwerten des Beschleunigungssensors erzeugte Steuerdaten auch unmittelbar und/oder unter Vermittlung des fahrzeuginternen Datenübertragungssystems an den Ultraschallsensor und/oder an das Radargerät des Fahrzeugs übertragen und hierdurch den Ultraschallsensor und/oder das Radargerät ansteuern. Insbesondere kann die Steuereinrichtung hierdurch den jeweiligen Erfassungsbereich des Ultraschallsensors und/oder des Radargeräts abhängig von den Messwerten des Beschleunigungssensors verändern.

Ein erfindungsgemäßes Fahrerassistenzsystem umfasst ein erfindungsgemäßes tragbares Kommunikationsgerät oder eine bevorzugte Ausgestaltung desselben.

Die Erfindung betrifft außerdem eine Verwendung eines in ein tragbares Kommunikationsgerät eingebauten Beschleunigungssensors zum Unterstützen eines Fahrers beim Führen eines Fahrzeugs.

Bei einem erfindungsgemäßen Verfahren wird ein Fahrer beim Führen eines Fahrzeugs mit Hilfe eines tragbaren Kommunikationsgeräts unterstützt. Es wird eine Beschleunigung des tragbaren Kommunikationsgeräts mittels eines Beschleunigungssensors des tragbaren Kommunikationsgeräts gemessen. Es wird eine Funktion, die den Fahrer beim Führen des Fahrzeugs unterstützt, durch eine Steuereinrichtung des tragbaren Kommunikationsgeräts auf der Basis von Messwerten für die Beschleunigung durchgeführt.

Die Erfindung umfasst auch ein - vorzugsweise auf einem Speichermedium gespeichertes - Computerprogramm, welches dazu ausgelegt ist, das erfindungsgemäße Verfahren durchzuführen, wenn es durch eine Steuereinrichtung ausgeführt wird.

Die mit Bezug auf das erfindungsgemäße tragbare Kommunikationsgerät vorgestellten bevorzugten Ausführungsformen und deren Vorteile gelten entsprechend für das erfindungsgemäße Fahrerassistenzsystem, für die erfindungsgemäße Verwendung, für das erfindungsgemäße Verfahren, wie auch für das erfindungsgemäße Computerprogramm.

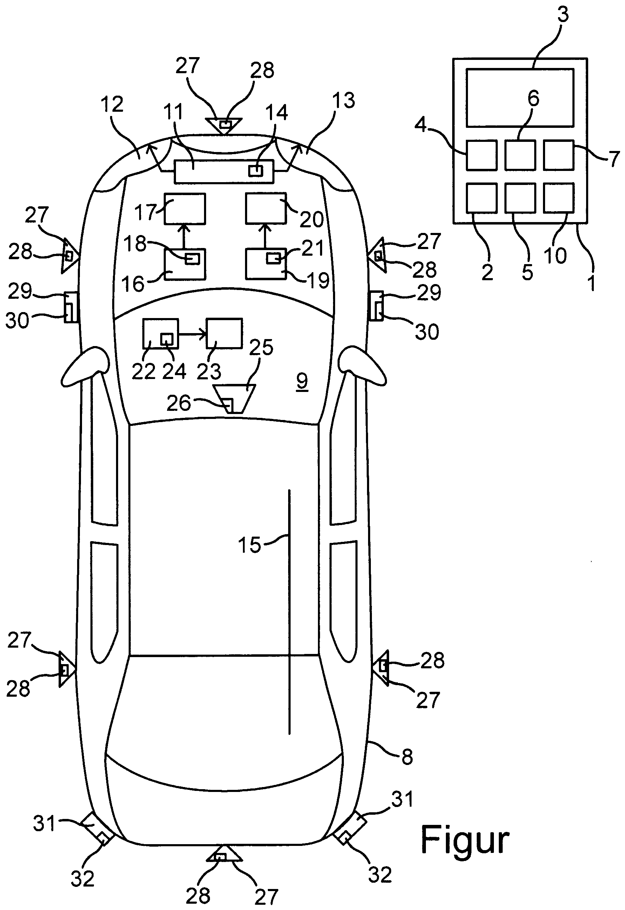

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in Alleinstellung verwendbar.

Die Erfindung wird nun anhand eines bevorzugten Ausführungsbeispiels näher erläutert, wie auch unter Bezugnahme auf die beigefügte Zeichnung. Die einzige Figur zeigt in schematischer Darstellung einen Personenkraftwagen mit einem Fahrerassistenzsystem einschließlich eines tragbaren Kommunikationsgeräts gemäß einer Ausführungsform der Erfindung.

Ein in der Figur in schematischer und höchst abstrakter Darstellung gezeigtes tragbares Kommunikationsgerät 1 gemäß einer Ausführungsform der Erfindung ist ein Mobiltelefon. Das tragbare Kommunikationsgerät 1 umfasst eine Steuereinrichtung 2, die zum Verarbeiten von Daten dient und zum Beispiel einen digitalen Signalprozessor umfassen kann. Das tragbare Kommunikationsgerät 1 umfasst ein Display 3, auf welchem Bilder angezeigt werden können. Das Display 3 wird durch die Steuereinrichtung 2 angesteuert. Das tragbare Kommunikationsgerät 1 umfasst außerdem einen dreidimensionalen Beschleunigungssensor 4, welcher zum Messen einer Beschleunigung des tragbaren Kommunikationsgeräts 1 dient und welcher Messdaten für die Beschleunigung an die Steuereinrichtung 2 übertragen kann. Das tragbare Kommunikationsgerät 1 umfasst außerdem ein Navigationssystem 5, welches zum Beispiel einen GPS-Empfänger und/oder einen Galileo-Empfänger aufweisen kann. Das Navigationssystem 5 kann Daten an die Steuereinrichtung 2 übertragen, nämlich zum Beispiel mit Informationen über die jeweils aktuelle globale Position des tragbaren Kommunikationsgeräts 1. Das tragbare Kommunikationsgerät 1 umfasst ferner einen Kompass 6, der seine Messwerte an die Steuereinrichtung 2 übertragen kann. Das tragbare Kommunikationsgerät 1 weist auch eine Kommunikationsschnittstelle 7 auf, die zur drahtlosen Datenübertragung (zum Beispiel nach einem WLAN(Wireless Local Area Network)-Standard und/oder einem Bluetooth-Standard) ausgebildet ist. Und zwar kann die Steuereinrichtung 2 über die Kommunikationsschnittstelle 7 Daten senden und empfangen.

Im Ausführungsbeispiel ist das tragbare Kommunikationsgerät 1 ein Teil eines Fahrerassistenzsystems eines Personenkraftwagens 8. Das tragbare Kommunikationsgerät 1 kann im Innenraum des Personenkraftwagens 1 -zum Beispiel mit Hilfe einer Halterung - an einer Windschutzscheibe 9 platziert werden. Die Steuereinrichtung 2 des tragbaren Kommunikationsgeräts 1 kann abhängig von den Messwerten des Beschleunigungssensors 4, den Messwerten des Kompasses 6 wie auch von Daten des Navigationssystems 5 verschiedenste Funktionen durchführen, die einen Fahrer beim Führen des Personenkraftwagens 1 unterstützen. Und zwar kann die Steuereinrichtung unabhängig von fahrzeuginternen Komponenten des Fahrerassistenzsystems folgende Funktionen durchführen.

Die Steuereinrichtung 2 kann abhängig von den Messwerten des Beschleunigungssensors 4 und/oder abhängig von den Messwerten des Kompasses 6 und/oder abhängig von Daten des Navigationssystems 5 ein Fahrverhalten des Fahrers bestimmen; die Steuereinrichtung 2 kann die Farbgebung einer Beleuchtung des Displays 3 abhängig von dem bestimmten Fahrverhalten des Fahrers verändern. Sind die Messwerte des Beschleunigungssensors 4 relativ gering, so kann das Display 3 grün beleuchtet werden. Eine solche Farbgebung des Displays 3 kann somit einem "ökonomischen Fahrverhalten" des Fahrers zugeordnet sein. Sind die Messwerte des Beschleunigungssensors 4 moderat bzw. fallen diese Messwerte in einen mittleren Wertebereich, so kann das Display 3 blau beleuchtet werden. Mit einer solchen Farbgebung der Beleuchtung des Displays 3 wird der Fahrer über sein "normales Fahrverhalten" informiert. Sind die Messwerte des Beschleunigungssensors 4 relativ hoch, so kann die Farbe der Beleuchtung des Displays 3 rot sein. Auf diesem Wege wird der Fahrer über sein "sportliches Fahrverhalten" informiert.

Die Steuereinrichtung 2 kann eine Kommunikationsverbindung herstellen, nämlich zwischen dem tragbaren Kommunikationsgerät 1 und einer Notrufzentrale. Diese Kommunikationsverbindung kann mobilfunkkonform sein bzw. gemäß einem Mobilfunkstandard (GSM-Standard und/oder UMTS-Standard) erfolgen. Diese Kommunikationsverbindung wird dann hergestellt, wenn die Messwerte des Beschleunigungssensors 4 einen vorbestimmten Grenzwert überschreiten, das heißt dann, wenn ein Unfall stattfindet und oder stattzufinden droht. Die Steuereinrichtung 2 kann in einem solchen Falle Informationsdaten an die Notrufezentrale übertragen, so dass die Notrufzentrale über einen möglichen Unfall informiert wird.

Abhängig von den Messwerten des Beschleunigungssensors 4 kann die Steuereinrichtung 2 darüber hinaus eine Beladung des Personenkraftwagens 8 und/oder eine Verteilung der Beladung im Personenkraftwagen 1 bestimmen. Dann kann die Steuereinrichtung 2 auf dem Display 3 Bilder mit Informationen über die ermittelte Beladung und/oder die ermittelte Verteilung der Beladung im Personenkraftwagen 8 anzeigen. Die Steuereinrichtung 2 kann den Fahrer auch dann warnen, wenn eine ungünstige Verteilung der Beladung im Personenkraftwagen 1 erkannt wird. Und zwar kann die Steuereinrichtung 2 dann eine entsprechende Information auf dem Display 3 anzeigen und/oder ein akustisches Signale ausgeben, nämlich mit Hilfe eines Lautsprechers 10 des tragbaren Kommunikationsgeräts 1.

Abhängig von den Messwerten des Beschleunigungssensors 4 und/oder des Messwertes des Kompasses 6 und/oder den Daten des Navigationssystems 5 kann die Steuereinrichtung 2 einen Verlauf einer Fahrbahn ermitteln, die der Personenkraftwagen 1 zurückgelegt hat. Abhängig von dem Verlauf der Fahrbahn kann die Steuereinrichtung 2 einen Konzentrationsgrad bzw. einen Grad der Aufmerksamkeit des Fahrers bestimmen. Lässt die Konzentration des Fahrers nach, so kann die Steuereinrichtung 2 davor den Fahrer entsprechend warnen, nämlich über das Display 3 und/oder den Lautsprecher 10.

Über die Kommunikationsschnittstelle 7 kann die Steuereinrichtung 2 Informationsdaten an andere Verkehrsteilnehmer übertragen, nämlich mit Informationen über den Konzentrationsgrad des Fahrers und/oder mit den Messwerten des Beschleunigungssensors 4. Somit können Fahrer anderer Fahrzeuge darüber informiert werden, wie das Fahrverhalten des Fahrers des Personenkraftwagens 8 und/oder wie die Beschleunigung des Personenkraftwagens 8 sind.

Über die Kommunikationsschnittstelle 7 kann das tragbare Kommunikationsgerät 1 auch mit in den Personenkraftwagen 8 eingebaute Komponenten des Navigationssystems kommunizieren. Dies können Nachrüstkomponenten, mit denen der Personenkraftwagen 8 nachträglich aufgerüstet wird, oder bereits werkseitig vorhandene Komponenten sein.

Und zwar kann das tragbare Kommunikationsgerät 1 über seine Kommunikationsschnittstelle 7 mit einem Scheinwerfer-Steuergerät 11 zur Ansteuerung von Scheinwerfern 12, 13 des Personenkraftwagens 8 kommunizieren. Das Scheinwerfer-Steuergerät 8 umfasst hierzu eine Kommunikationsschnittstelle 14, die zur drahtlosen Datenübertragung gemäß einem Standard der oben genannten Familien ausgebildet ist. Also kann das tragbare Kommunikationsgerät 1 unmittelbar mit dem Scheinwerfer-Steuergerät 11 kommunizieren. Alternativ kann vorgesehen sein, dass das tragbare Kommunikationsgerät 1 mit dem Scheinwerfer-Steuergerät 11 über einen fahrzeuginternen Kommunikationsbus 15 kommuniziert. Eine Datenkommunikation zwischen dem tragbaren Kommunikationsgerät 1 und dem Kommunikationsbus 15 kann dann entweder drahtlos - an den Kommunikationsbus 15 kann eine entsprechende Kommunikationsschnittstelle angeschlossen sein - oder drahtgebunden über eine elektrische Verbindung erfolgen - dann kann die elektrische Verbindung über eine Halterung für das tragbare Kommunikationsgerät 1 bereitgestellt werden.

Das tragbare Kommunikationsgerät 1 kann darüber hinaus mit einem Bremssteuergerät 16 des Personenkraftwagens 8 kommunizieren, welches zur Ansteuerung eines Bremssystems 17 ausgebildet ist. Unter Übertragung entsprechender Steuersignale an das Bremssteuergerät 16 kann das tragbare Kommunikationsgerät 1 das Bremssystem 17 ansteuern und den Personenkraftwagen 8 somit abbremsen. Das Bremssteuergerät 16 ist mit einer entsprechenden Kommunikationsschnittstelle 18 ausgestattet, nämlich werkseitig oder nachträglich aufgerüstet. Die Kommunikationsschnittstelle 18 ist zur drahtlosen Datenübertragung gemäß einem Standard der oben genannten Familien ausgebildet.

Die Steuereinrichtung 2 des tragbaren Kommunikationsgeräts 1 kann über die Kommunikationsschnittstelle 7 auch mit einem Lenksteuergerät 19 des Personenkraftwagens 8 kommunizieren. Das Lenksteuergerät 19 dient zur Ansteuerung einer Lenkvorrichtung 20 des Personenkraftwagens 8 und umfasst eine Kommunikationsschnittstelle 21, die zur drahtlosen Datenübertragung gemäß einem Standard der oben genannten Familien ausgebildet ist. Unter Übertragung entsprechender Steuersignale an das Lenksteuergerät 19 kann die Steuereinrichtung 2 des tragbaren Kommunikationsgeräts 1 die lenkbaren Räder des Personenkraftwagens 8 lenken.

Das tragbare Kommunikationsgerät 1 kann auch mit einem Bildschirm-Steuergerät 22 kommunizieren und über das Bildschirm-Steuergerät 22 einen Bildschirm 23 des Personenkraftwagens 8 ansteuern. Und zwar kann der Bildschirm 23 eine Nachrüstkomponente, mit welcher der Personenkraftwagen 8 nachträglich aufgerüstet wurde, oder eine werkseitig im Personenkraftwagen 8 vorhanden Komponente sein. Das Bildschirm-Steuergerät 22 weist eine entsprechende Kommunikationsschnittstelle 24 auf, über welche es mit dem tragbaren Kommunikationsgerät 1 kommunizieren kann, nämlich gemäß einem Standard der oben genannten Familien. Unter Ansteuerung des Bildschirm-Steuergeräts 22 kann die Steuereinrichtung 2 des tragbaren Kommunikationsgeräts 1 Bilder auf dem Bildschirm 23 anzeigen; die Steuereinrichtung 2 kann an das Bildschirm-Steuergerät 22 Bilddaten übertragen, und das Bildschirm-Steuergerät 22 kann den Bildschirm 23 derart ansteuern, dass auf diesem Bilder angezeigt werden, die auf den Bilddaten beruhen.

Der Personenkraftwagen 8 umfasst darüber hinaus eine Vielzahl von Sensoreinrichtungen, die im Personenkraftwagen 8 werkseitig vorhanden waren oder als Nachrüstkomponenten in den Personenkraftwagen 8 nachträglich eingesetzt wurden. Und zwar umfasst das Fahrerassistenzsystem eine Frontkamera 25, die hinter der Windschutzscheibe 9 im Innenraum des Personenkraftwagens 1 unmittelbar unter einem Fahrzeughimmel platziert ist. Die Frontkamera 25 erfasst einen Bereich zum Beispiel bis zu einer Distanz von 5 bis 20 Metern, insbesondere bis zu 10 Metern, vor dem Personenkraftwagen 8. Die Frontkamera 25 kann eine CMOS-Kamera sein. Sie erfasst Bilddaten über den Bereich vor dem Personenkraftwagen 1 und überträgt die Bilddaten an das tragbare Kommunikationsgerät 1, nämlich über eine Kommunikationsschnittstelle 26. Die Kommunikationsschnittstelle 26 ist zur drahtlosen Datenübertragung gemäß einem Kommunikationsstandard der oben genannten Familien ausgebildet. Die Steuereinrichtung 2 kann dann die Bilddaten der Frontkamera 25 empfangen, sie verarbeiten und zum Beispiel das Display 3 abhängig von den empfangenen Bilddaten ansteuern und/oder Steuerdaten erzeugen und an eine weitere Komponente des Personenkraftwagens 8 übertragen, nämlich insbesondere an das Bildschirm-Steuergerät 22. Gleichfalls kann die Steuereinrichtung 2 - abhängig von den Messwerten des Beschleunigungssensors 4 und/oder den Messwerten des Kompasses 6 und/oder den Daten des Navigationssystems 5 - Steuerdaten an die Frontkamera 25 senden. Aufgrund der Steuerdaten kann die Frontkamera 25 zum Beispiel einzoomen oder auszoomen und/oder unterschiedliche Bereiche eines Gesamterfassungsbereichs aufnehmen. Zum Beispiel kann vorgesehen sein, dass die Steuereinrichtung 2 des tragbaren Kommunikationsgeräts 1 bei einer Beschleunigung des Personenkraftwagens 8 solche Steuerdaten an die Frontkamera 25 übermittelt, die ein Einzoomen bewirken, während bei einer Verzögerung des Personenkraftwagens 8 die Steuereinrichtung 2 solche Steuerdaten an die Frontkamera 25 übertragen kann, die ein Auszoomen bewirken. Erkennt die Steuereinrichtung 2, dass der Personenkraftwagen 8 durch eine Kurve nach links gefahren wird, so kann sie solche Steuerdaten an die Frontkamera 25 senden, die das Erfassen eines linken Bereichs des Gesamterfassungsbereichs der Frontkamera 25 veranlassen. Beim Durchfahren einer Rechtskurve kann die Steuereinrichtung 2 wiederum solche Steuerdaten an die Frontkamera 25 übertragen, die das Erfassen eines rechten Bereichs des Gesamterfassungsbereichs bewirken. Und zwar kann die Frontkamera 25 eine elektrisch ansteuerbare optische Einrichtung aufweisen, die dazu ausgebildet ist, verschiedene Bereiche des Gesamterfassungsbereichs zu erfassen. Ist die Frontkamera 25 jedoch eine solche, die weder einzoomen noch auszoomen kann, so kann die Steuereinrichtung 2 des tragbaren Kommunikationsgeräts 1 entsprechend das Display 3 und/oder den Bildschirm 23 derart ansteuern, dass verschiedene Bereiche des Gesamterfassungsbereichs der Frontkamera 25 dargestellt werden können. Und zwar kann die Steuereinrichtung 2 das Display 3 derart ansteuern und/oder an das Bildschirm-Steuergerät 22 solche Steuerdaten übertragen und somit den Bildschirm 23 derart ansteuern, dass abhängig von den Messwerten des Beschleunigungssensors 4 und/oder des Kompasses 6 und/oder von den Daten des Navigationssystems 5 unterschiedliche Bereiche des Gesamterfassungsbereichs der Frontkamera 25 vergrößert dargestellt werden können.

Das Fahrerassistenzsystem umfasst außerdem eine Vielzahl von Kameras 27, die alle über eine Kommunikationsschnittstelle 28 verfügen. Im Ausführungsbeispiel sind sechs Kameras 27 vorgesehen, eine Kamera 27 an der Fahrzeugfront am vorderen Stoßfänger, eine Kamera 27 in einem linken Randbereich des vorderen Stoßfängers an einer linken Seitenflanke des Personenkraftwagens 8, eine Kamera 27 in einem rechten Randbereich des vorderen Stoßfängers an einer rechten Seitenflanke des Personenkraftwagens 8, eine Kamera 27 in einem linken Randbereich eines hinteren Stoßfängers an der linken Seitenflanke, eine Kamera 27 am Heck des Personenkraftwagens 8 am hinteren Stoßfänger und eine Kamera 27 in einem rechten Randbereich des hinteren Stoßfängers an der rechten Seitenflanke. Die Kommunikationsschnittstellen 28 der Kamera 27 sind zur drahtlosen Datenübertragung gemäß einem Standard der oben genannten Familien ausgebildet. Die Kamera 27 dienen zum Erfassen der Umgebung des Personenkraftwagens 8; sie weisen jeweils einen relativ breiten Erfassungsbereich mit einem Öffnungswinkel von zum Beispiel 180° auf. Somit kann durch die Kameras 27 die gesamte Umgebung des Personenkraftwagens 8, nämlich ein 360°-Bild, erfasst werden. Die Anzahl sowie die Anordnung der Kameras 27 am Personenkraftwagen 8 sind in der Figur lediglich beispielhaft dargestellt; anstelle von sechs Kameras 27 können auch vier Kameras verwendet werden, die aufgrund ihrer breiten Erfassungsbereiche die gesamte Umgebung des Personenkraftwagens 8 erfassen können. Die Kameras 27 übertragen ihre Bilddaten an das tragbare Kommunikationsgerät 1; die Steuereinrichtung 2 kann die Bilddaten verarbeiten. Abhängig von den Bilddaten sowie abhängig von den Messwerten des Beschleunigungssensors 4 und/oder des Kompasses 6 und/oder abhängig von den Daten des Navigationssystems 5 kann die Steuereinrichtung 2 dann das Display 3 ansteuern und/oder Steuerdaten an das Bildschirm-Steuergerät 22 übertragen. Es kann auch auf die Übertragung der Bilddaten von den Kameras 27 an das tragbare Kommunikationsgerät 1 verzichtet werden; dann übertragen die Kameras 27 die Bilddaten unmittelbar an das Bildschirm-Steuergerät 22, und die Steuereinrichtung 2 des tragbaren Kommunikationsgeräts 1 übermittelt Steuerdaten an das Bildschirm-Steuergerät 22. Auf diesem Wege kann die Steuereinrichtung 2 abhängig von den Messwerten des Beschleunigungssensors 4 und/oder des Kompasses 6 und/oder den Daten des Navigationssystems 5 bestimmen, welcher Bereich eines durch die Kameras 27 erfassten Gesamterfassungsbereichs auf dem Bildschirm 23 angezeigt werden soll. Zum Beispiel kann die Steuereinrichtung 2 solche Steuerdaten an das Bildschirm-Steuergerät 22 übermitteln, aufgrund deren eine Auswahl zwischen Bildern aller Kameras 27 getroffen wird.

Also kann die Steuereinrichtung 2 verschiedene Bereiche der Umgebung des Personenkraftwagens 8 auf dem Display 2 und/oder dem Bildschirm 23 anzeigen. Erkennt die Steuereinrichtung 2, dass der Personenkraftwagen 8 rückwärts gefahren wird, so kann sie auf dem Display 3 und/oder dem Bildschirm 23 Bilder der am Heck des Personenkraftwagens 8 angeordneten Kamera 27 anzeigen. Abhängig von den Bilddaten der Kameras 27 kann die Steuereinrichtung 2 auch weitere Bilddaten berechnen, die zum Beispiel eine Darstellung einer Draufsicht auf den Personenkraftwagen 8 und einen Bereich seiner Umgebung beinhalten. Eine solche Darstellung des Personenkraftwagens 8 aus einer Vogelperspektive kann auf dem Display 3 und/oder dem Bildschirm 23 angezeigt werden. Die Steuereinrichtung 2 kann abhängig von den Messwerten des Beschleunigungssensors 4 und/oder des Kompasses 6 und/oder den Daten des Navigationssystems 5 verschiedene Bereiche der Umgebung des Personenkraftwagens 8 zusammen mit zumindest einem Bereich des Personenkraftwagens 8 aus der Vogelperspektive anzeigen. Wird der Personenkraftwagen 8 beschleunigt so kann die Steuereinrichtung 2 einen vorderen Bereich des Personenkraftwagens 8 sowie einen Bereich der Umgebung vor dem Personenkraftwagen 8 aus einer Vogelperspektive anzeigen, nämlich auf dem Display 3 und/oder dem Bildschirm 23. Wird der Personenkraftwagen 8 durch eine Linkskurve gefahren, so kann die Steuereinrichtung 2 solche Bilddaten berechnen die eine Darstellung einer Draufsicht auf einen vorderen linken Bereich des Personenkraftwagens 8 sowie einen Bereich der Umgebung vor und links des Personenkraftwagens 8 beinhalten. Entsprechend kann die Steuereinrichtung 2 bei einer Rechtskurve ein solches Bild auf dem Display 3 und/oder dem Bildschirm 23 anzeigen, welches einen vorderen rechten Bereich des Personenkraftwagens 8 sowie einen Bereich vor und rechts des Personenkraftwagens 8 darstellt. Die Steuereinrichtung 2 kann bei den Kameras 27 auch die Zoom-Funktion durchführen, nämlich unter Ausgabe entsprechender Steuerdaten. Dies kann abhängig von den Messwerten des Beschleunigungssensors 4 und/oder des Kompasses 6 und/oder von Daten des Navigationssystems 5 erfolgen.

Das Fahrerassistenzsystem umfasst ferner zwei Ultraschallsensoren 29, die jeweils an einer Seitenflanke des Personenkraftwagens 8 angebracht sind, nämlich beispielsweise im Bereich des jeweiligen Außenspiegels oder in jeweiligen Randbereichen des vorderen Stoßfängers. Die Ultraschallsensoren 29 erfassen jeweils einen seitlichen Umgebungsbereich des Personenkraftwagens 8. Die Ultraschallsensoren 29 umfassen im Ausführungsbeispiel jeweils eine Kommunikationsschnittstelle 30, die zur drahtlosen Datenübertragung gemäß einem Standard der oben genannten Familien ausgebildet sind. Über die jeweilige Kommunikationsschnittstelle 30 können die Ultraschallsensoren 29 Ultraschalldaten an das tragbare Kommunikationsgerät 1 senden. Abhängig von den empfangenen Ultraschallsdaten kann die Steuereinrichtung 2 des tragbaren Kommunikationsgeräts 1 dann verschiedene Funktionen durchführen, die den Fahrer beim Führen des Personenkraftwagens 8 unterstützen. Alternativ kann das tragbare Kommunikationsgerät 1 mit den Ultraschallsensoren 29 auch über den fahrzeuginternen Kommunikationsbus 15 kommunizieren.

Das Fahrerassistenzsystem umfasst außerdem zwei Radargeräte 31, die zum Orten von Objekten in der Umgebung des Personenkraftwagens 8 dienen. Die Radargeräte 31 können zum Beispiel in jeweiligen Eckbereichen des hinteren Stoßfängers des Personenkraftwagens 8 angebracht sein. Die Radargeräte 31 können auch die jeweiligen Totwinkelbereiche des Personenkraftwagens 8 erfassen. Die Radargeräte 31 umfassen jeweils eine Kommunikationsschnittstelle 32 zur drahtlosen Datenübertragung gemäß einem Standard der oben genannten Familien. Und zwar können die Radargeräte 31 über die jeweilige Kommunikationsschnittstelle 32 und/oder über den Kommunikationsbus 15 Radardaten an das tragbare Kommunikationsgerät 1 übertragen. Die Steuereinrichtung 2 kann dann verschiedene Funktionen durchführen, die den Fahrer beim Führen des Personenkraftwagens 8 unterstützen.

Wie bereits ausgeführt, überträgt die Frontkamera 25 Bilddaten an das tragbare Kommunikationsgerät 1. Die Steuereinrichtung 2 kann abhängig von den Bilddaten folgende Funktionen zur Unterstützung des Fahrers durchführen. Die Steuereinrichtung 2 kann auf dem Display 3 und/oder dem Bildschirm 23 Bilder anzeigen, die auf den gewonnenen Bilddaten der Frontkamera 25 beruhen. Die Steuereinrichtung 2 kann auch die Bilddaten der Frontkamera 25 einer Mustererkennung unterziehen, um ein Verkehrszeichen zu erkennen. Nach Erkennen eines Verkehrszeichens kann die Steuereinrichtung 2 ein das erkannte Verkehrszeichen wiedergebendes Bild auf dem Display 3 und/oder dem Bildschirm 23 anzeigen und/oder ein das erkannte Verkehrszeichen charakterisierendes akustisches Signal ausgeben, nämlich mit Hilfe des Lautsprechers 10. Hier zeigt sich auch der Beschleunigungssensor 4 besonders vorteilhaft. Abhängig von den Messwerten des Beschleunigungssensors 4 kann die Steuereinrichtung 2 nämlich die jeweils momentane Geschwindigkeit des Personenkraftwagens 8 berechnen. Erkennt die Steuereinrichtung 2 aufgrund der Bilddaten der Frontkamera 25 ein Verkehrszeichen mit einer Geschwindigkeitsbegrenzung und stellt die Steuereinrichtung 2 fest, dass der Fahrer zu schnell fährt, so kann sie den Fahrer entsprechend warnen. Dies ist sowohl über das Display 3, als auch über den Bildschirm 23, wie auch über den Lautsprecher 10 möglich.

Abhängig von den Bilddaten der Frontkamera 25 kann die Steuereinrichtung 2 auch Fahrbahnmarkierungen erkennen. Die Steuereinrichtung 2 kann dann ein bevorstehendes oder ein bereits erfolgtes Überfahren einer erkannten Fahrbahnmarkierung durch den Personenkraftwagen 9 feststellen und nach Feststellen eines bevorstehenden oder erfolgten Überfahrens der Fahrbahnmarkierung ein akustisches Signal ausgeben und/oder ein entsprechendes Bild auf dem Display 3 und/oder dem Bildschirm 23 anzeigen. Dabei kann die Steuereinrichtung 2 auch die Messwerte des Beschleunigungssensors 4 und/oder des Kompasses 6 und/oder die Daten des Navigationssystems 5 berücksichtigen, um ein Verlassen einer Spur durch den Personenkraftwagen 8 zuverlässig zu erkennen. Die Steuereinrichtung 2 kann nach Erkennen eines bevorstehenden oder erfolgten Überfahrens einer Fahrbahnmarkierung auch Steuerdaten an das Bremssteuergerät 16 übertragen, so dass der Personenkraftwagen 8 mit einer Verzögerung kleiner als 0,3 G verzögert wird. Dann wird der Fahrer durch das Abbremsen des Personenkraftwagens 8 vor dem möglichen Überfahren der Fahrbahnmarkierung gewarnt.

Die Steuereinrichtung 2 kann abhängig von den Bilddaten der Frontkamera 25 einen Nebel erkennen und/oder einen Helligkeitsgrad der Umgebung des Personenkraftwagens 8 ermitteln und/oder Schweinwerfer eines Gegenverkehrs und/oder Rückleuchten vorausfahrender Fahrzeuge erkennen. Abhängig davon kann die Steuereinrichtung 2 Steuerdaten an das Scheinwerfer-Steuergerät 11 übertragen, um die Scheinwerfer 12, 13 anzusteuern. Hier kann die Steuereinrichtung 2 auch die Messwerte des Beschleunigungssensors 4 und/oder die Messwerte des Kompasses 6 und/oder die Daten des Navigationssystems 5 berücksichtigen. Insbesondere kann die Steuereinrichtung 2 abhängig von einer Querbeschleunigung des Personenkraftwagens 8 die Scheinwerfer 12, 13 ansteuern. Zum Beispiel kann bei einer Kurvenfahrt die Leuchtrichtung in Kurvenrichtung verändert werden. Sind bei den Scheinwerfern 12, 13 Nebelleuchten vorhanden, so kann bei einer Kurvenfahrt nach links eine linke Nebelleuchte und beim Durchfahren einer Rechtskurve eine rechte Nebelleuchte aktiviert werden. Ergänzend oder alternativ kann die Steuereinrichtung 2 abhängig von den Messwerten des Beschleunigungssensors 4 auch die Position einer Hell-Dunkel-Grenze eines durch die Scheinwerfer 12, 13 erzeugten Lichts einstellen.

Anhand der Ultraschalldaten der Ultraschallsensoren 29 kann die Steuereinrichtung 2 zum Beispiel Parklücken erkennen, in welche der Personenkraftwagen 8 eingeparkt werden kann. Abhängig von erkannten Parklücken kann die Steuereinrichtung 2 eine Parkbahn berechnen, entlang welcher der Personenkraftwagen 8 in eine erkannte Parklücke eingeparkt werden kann. Die Steuereinrichtung 2 kann auch Steuerdaten an das Lenksteuergerät 19 übertragen und somit die lenkbaren Räder des Personenkraftwagens lenken, nämlich gemäß einer berechneten Parkbahn. Auf diesem Wege wird dem Fahrer ein semi-autonomes Parkhilfesystem bereitgestellt, mit welchem der Personenkraftwagen 8 in eine Parklücke eingeparkt werden kann, ohne dass der Fahrer Lenkaktionen ausführen muss. Und zwar muss der Fahrer lediglich Gas geben und bremsen, das Lenken der lenkbaren Räder übernimmt die Steuereinrichtung 2. Alternativ kann die Steuereinrichtung 2 - anstatt die Steuerdaten an das Lenksteuergerät 19 zu übertragen - Steuerdaten an das Bildschirm-Steuergerät 22 übertragen und/oder das Display 3 ansteuern und hierdurch den Fahrer darüber informieren, welche Lenkaktionen er auszuführen hat. Dann kann der Fahrer selbst mittels des Lenkrads die lenkbaren Räder des Personenkraftwagens 8 lenken und den Personenkraftwagen 8 in die Parklücke einparken. Auch hier kann der Beschleunigungssensor 4 nützlich sein. Je nach Fahrtrichtung beim Einparken kann die Steuereinrichtung 2 nämlich - auf dem Display 3 und/oder auf dem Bildschirm 23 - Bilder unterschiedlicher Bereiche der Fahrzeugumgebung anzeigen. Der Fahrer kann somit die Umgebung des Personenkraftwagens 8 direkt auf dem Display 3 und/oder dem Bildschirm 23 sehen.

Die Steuereinrichtung 2 kommuniziert auch mit den Radargeräten 31. Und zwar kann die Steuereinrichtung 2 abhängig von Radardaten Objekte in den jeweiligen Erfassungsbereichen der Radargeräte 31 orten. Die Steuereinrichtung 2 kann hier zum Beispiel eine Geschwindigkeit und/oder eine Beschleunigung und/oder eine Bewegungsrichtung eines erkannten Objektes relativ zum Personenkraftwagen 8 bestimmen und den Fahrer entsprechend informieren. Zum Beispiel kann die Steuereinrichtung 2 Bilder auf dem Display 3 und/oder dem Bildschirm 23 anzeigen und/oder mittels des Lautsprechers 10 akustische Signale ausgeben. Dies ist dann besonders vorteilhaft, wenn die Radargeräte 31 auch die Totwinkelbereiche erfassen und im jeweiligen Totwinkelbereich befindliche Objekte detektieren können. Abhängig von den Messwerten des Beschleunigungssensors 4 und/oder des Kompasses 6 und/oder den Daten des Navigationssystems 5 kann die Steuereinrichtung 2 auch Steuerdaten an die Radargeräte 31 übertragen. Mit den Steuerdaten kann die Steuereinrichtung 2 zum Beispiel die jeweiligen Erfassungsbereiche - einen Bereich der Umgebung, der augenblicklich durch die Radargeräte 31 zum Beispiel aufgrund einer Phasenansteuerung von Antennenelementen erfasst wird - verändern. Über eine solche Ansteuerung der Radargeräte 31 kann sich die Steuereinrichtung 2 über verschiedene Bereiche der Fahrzeugumgebung informieren. Erkennt die Steuereinrichtung 2 aufgrund der Messwerte des Beschleunigungssensors 4 eine Rückfahrt, so kann sie die Radargeräte 31 so ansteuern, dass sie nur einen Bereich hinter dem Personenkraftwagen 8 und nicht die seitlichen Bereiche erfassen. Bei einer Fahrt nach vorne kann wiederum sinnvoll sein, dass die Radargeräte 31 die Totwinkelbereiche des Personenkraftwagens 8 erfassen.

Die Erfindung ist nicht auf die in der Zeichnung dargestellten Ausführungsbeispiele beschränkt. Alle vorstehend im allgemeinen Teil der Beschreibung beschriebenen und in der Zeichnung dargestellten Merkmale und Merkmalskombinationen sind miteinander kombinierbar, so dass diesbezüglich auch derart gebildete Ausführungsformen als offenbart anzusehen sind. Insbesondere können anhand der im allgemeinen Teil der Beschreibung genannten Merkmale und Merkmalskombinationen neue Ausführungsbeispiele generiert werden, nämlich auch solche, die nicht explizit in der Zeichnung dargestellt sind. Merkmale und Merkmalskombinationen der mit der Figurenbeschreibung offenbarten Ausführungsbeispiele können mit Merkmalen und Merkmalskombinationen, die im allgemeinen Teil der Beschreibung offenbart sind, zu neuen als offenbart anzusehenden Ausführungsbeispielen kombiniert werden.

## Patentansprüche

1. Mobiltelefon (1) mit einer Steuereinrichtung (2), die dazu ausgelegt ist, eine Funktion durchzuführen, die einen Fahrer beim Führen eines Fahrzeugs (8) unterstützt,
**gekennzeichnet durch**
einen Beschleunigungssensor (4), der zum Messen einer Beschleunigung des Mobiltelefons (1) und zum Übermitteln von Messwerten für die Beschleunigung an die Steuereinrichtung (2) ausgebildet ist, wobei die Steuereinrichtung (2) dazu ausgelegt ist, abhängig von den Messwerten für die Beschleunigung die Funktion durchzuführen durch Ansteuerung einer Komponente des Fahrzeugs (8).

2. Mobiltelefon (1) nach Anspruch 1,
**dadurch gekennzeichnet, dass**
die Steuereinrichtung (2) dazu ausgelegt ist, abhängig von den Messwerten des Beschleunigungssensors (4) ein Fahrverhalten des Fahrers zu bestimmen und den Fahrer über sein Fahrverhalten zu informieren.

3. Mobiltelefon (1) nach Anspruch 2,
**dadurch gekennzeichnet, dass**
die Steuereinrichtung (2) dazu ausgelegt ist, abhängig von dem Fahrverhalten des Fahrers die Farbgebung einer Beleuchtung, insbesondere einer Hintergrundbeleuchtung, einer Anzeigeeinrichtung (3) des Mobiltelefons (1) zu verändern.

4. Mobiltelefon (1) nach einem der vorhergehenden Ansprüche,
**dadurch gekennzeichnet, dass**
die Steuereinrichtung (2) dazu ausgelegt ist, abhängig von den Messwerten des Beschleunigungssensors (4) eine Orientierung des Mobiltelefons (1) im Raum zu bestimmen.

5. Mobiltelefon (1) nach einem der vorhergehenden Ansprüche,
**dadurch gekennzeichnet, dass**
die Steuereinrichtung (2) dazu ausgelegt ist, abhängig von den Messwerten des Beschleunigungssensors (4) eine Beladung des Fahrzeugs (8) und/oder eine Verteilung der Beladung im Fahrzeug (8) zu bestimmen und den Fahrer über die Beladung und/oder über die Verteilung der Beladung zu informieren.

6. Mobiltelefon (1) nach einem der vorhergehenden Ansprüche,
**dadurch gekennzeichnet, dass**
die Steuereinrichtung (2) dazu ausgelegt ist, abhängig von den Messwerten des Beschleunigungssensors (4) einen Konzentrationsgrad des Fahrers zu bestimmen.

7. Mobiltelefon (1) nach einem der vorhergehenden Ansprüche,
**dadurch gekennzeichnet, dass**
die Steuereinrichtung (2) dazu ausgelegt ist, abhängig von den Messwerten des Beschleunigungssensors (4) eine Geschwindigkeit des Mobiltelefons (1) zu bestimmen.

8. Mobiltelefon (1) nach einem der vorhergehenden Ansprüche,
**dadurch gekennzeichnet, dass**
die Steuereinrichtung (2) dazu ausgelegt ist, abhängig von den Messwerten des Beschleunigungssensors (4) einen bevorstehenden Parkvorgang des Fahrzeugs (1) zu erkennen und nach Erkennen eines bevorstehenden Parkvorgangs den Fahrer beim Durchführen des Parkvorgangs zu unterstützen.

9. Mobiltelefon (1) nach einem der vorhergehenden Ansprüche,
**dadurch gekennzeichnet, dass**
das Mobiltelefon (1) eine Kommunikationsschnittstelle (7) zur drahtlosen Datenübertragung aufweist und die Steuereinrichtung (2) dazu ausgelegt ist, Daten mit Messwerten des Beschleunigungssensors (4) über die Kommunikationsschnittstelle (7) zu senden.

10. Mobiltelefon (1) nach einem der vorhergehenden Ansprüche,
**dadurch gekennzeichnet, dass**
das Mobiltelefon (1) ein Navigationssystem (5) umfasst und die Steuereinrichtung (2) dazu ausgelegt ist, auch unter Berücksichtigung von Daten des Navigationssystems (5) eine Funktion durchzuführen, die den Fahrer beim Führen des Fahrzeugs (8) unterstützt.

11. Mobiltelefon (1) nach einem der vorhergehenden Ansprüche,
**dadurch gekennzeichnet, dass**
das Mobiltelefon (1) einen Kompass (6) umfasst und die Steuereinrichtung (2) dazu ausgelegt ist, auch unter Berücksichtigung von Messwerten des Kompasses (6) eine Funktion durchzuführen, die den Fahrer beim Führen des Fahrzeugs (8) unterstützt.

12. Mobiltelefon (1) nach einem der vorhergehenden Ansprüche,
**dadurch gekennzeichnet, dass**
die Steuereinrichtung (2) dazu ausgelegt ist, abhängig von den Messwerten des Beschleunigungssensors (4) auf einen Zustand einer Straße, auf welcher das Fahrzeug (8) gefahren wird, zurück zu schließen.

13. Mobiltelefon (1) nach einem der vorhergehenden Ansprüche,
**dadurch gekennzeichnet, dass**
das Mobiltelefon (1) eine Kommunikationsschnittstelle (7), insbesondere zur drahtlosen Datenübertragung, aufweist und die Steuereinrichtung (2) dazu ausgelegt ist, über die Kommunikationsschnittstelle (7) Steuerdaten an ein fahrzeuginternes Datenübertragungssystem (15) und/oder unmittelbar an zumindest eine Komponente (11, 16, 19, 22, 26, 27, 29, 31) des Fahrzeugs zu senden und/oder Informationsdaten von dem fahrzeuginternen Datenübertragungssystem (15) und/oder unmittelbar von zumindest einer Komponente (11, 16, 19, 22, 26, 27, 29, 31) des Fahrzeugs (8) zu empfangen.

14. Mobiltelefon (1) nach Anspruch 13,
**dadurch gekennzeichnet, dass**
die Steuereinrichtung (2) dazu ausgelegt ist, abhängig von den Messwerten des Beschleunigungssensors (4) erzeugte Steuerdaten unmittelbar und/oder unter Vermittlung des fahrzeuginternen Datenübertragungssystems (15) an eine Beleuchtungseinrichtung (11, 12, 13) des Fahrzeugs (8) zu senden und hierdurch die Beleuchtungseinrichtung (11, 12, 13) anzusteuern.

15. Mobiltelefon (1) nach Anspruch 13 oder 14,
**dadurch gekennzeichnet, dass**
die Steuereinrichtung (2) dazu ausgelegt ist, abhängig von den Messwerten des Beschleunigungssensors (4) erzeugte Steuerdaten unmittelbar und/oder unter Vermittlung des fahrzeuginternen Datenübertragungssystems (15) an eine Anzeigeeinrichtung (22, 23) des Fahrzeugs (8) zu senden und hierdurch die Anzeigeeinrichtung (22, 23) anzusteuern.

16. Mobiltelefon (1) nach einem der Ansprüche 13 bis 15,
**dadurch gekennzeichnet, dass**
die Steuereinrichtung (2) dazu ausgelegt ist, abhängig von den Messwerten des Beschleunigungssensors (4) erzeugte Steuerdaten unmittelbar und/oder unter Vermittlung des fahrzeuginternen Datenübertragungssystems (15) an eine Kamera (25, 27) des Fahrzeugs, insbesondere eine hinter einer Windschutzscheibe (9) platzierte Frontkamera (25) und/oder eine an einer äußeren Oberfläche des Fahrzeugs (8) angeordneten Kamera (27), zu senden und hierdurch die Kamera (25, 27) anzusteuern.

17. Fahrerassistenzsystem mit einem Mobiltelefon (1) nach einem der vorhergehenden Ansprüche.

18. Verfahren zum Unterstützen eines Fahrers beim Führen eines Fahrzeugs (8) mithilfe eines Mobiltelefons (1), mit den Schritten:
- Messen einer Beschleunigung des Mobiltelefons (1) mittels eines Beschleunigungssensors (4) des Mobiltelefons (1) und
- Durchführen einer Funktion, die den Fahrer beim Führen des Fahrzeugs (8) unterstützt, durch eine Steuereinrichtung (2) des Mobiltelefons (1) auf der Basis von Messwerten für die Beschleunigung durch Ansteuerung einer Komponente des Fahrzeugs (8).

## Claims

1. Mobile phone (1) having a control device (2) which is configured to carry out a function which assists a driver in driving a vehicle (8),
**characterized by**
an acceleration sensor (4) which is designed to measure an acceleration of the mobile phone (1) and to transfer measured values for the acceleration to the control device (2), wherein the control device (2) is configured to carry out the function in accordance with the measured values for the acceleration by actuating a component of the vehicle (8).

2. Mobile phone (1) according to Claim 1,
**characterized in that**
the control device (2) is configured to determine a driving behaviour of the driver as a function of the measured values of the acceleration sensor (4) and to inform the driver about his driving behaviour.

3. Mobile phone (1) according to Claim 2,
**characterized in that**
the control device (2) is configured to change the colouring of lighting, in particular of background lighting, of a display device (3) of the mobile phone (1) as a function of the driving behaviour of the driver.

4. Mobile phone (1) according to one of the preceding claims,
**characterized in that**
the control device (2) is configured to determine orientation of the mobile phone (1) in space as a function of the measured values of the acceleration sensor (4).

5. Mobile phone (1) according to one of the preceding claims,
**characterized in that**
the control device (2) is configured to determine a load of the vehicle (8) and/or a distribution of the load in the vehicle (8) and to inform the driver about the load and/or about the distribution of the load as a function of the measured values of the acceleration sensor (4).

6. Mobile phone (1) according to one of the preceding claims,
**characterized in that**
the control device (2) is configured to determine a degree of concentration of the driver as a function of the measured values of the acceleration sensor (4) .

7. Mobile phone (1) according to one of the preceding claims,
**characterized in that**
the control device (2) is configured to determine a speed of the mobile phone (1) as a function of the measured values of the acceleration sensor (4).

8. Mobile phone (1) according to one of the preceding claims,
**characterized in that**
the control device (2) is configured to detect an imminent parking process of the vehicle (1) as a function of the measured values of the acceleration sensor (4), and to assist the driver in carrying out the parking process after an imminent parking process has been detected.

9. Mobile phone (1) according to one of the preceding claims,
**characterized in that**
the mobile phone (1) has a communication interface (7) for the wireless transmission of data, and the control device (2) is configured to transmit data with measured values of the acceleration sensor (4) via the communication interface (7).

10. Mobile phone (1) according to one of the preceding claims,
**characterized in that**
the mobile phone (1) comprises a navigation system (5), and the control device (2) is configured also to carry out, while taking into account data of the navigation system (5), a function which assists the driver in driving the vehicle (8).

11. Mobile phone (1) according to one of the preceding claims,
**characterized in that**
the mobile phone (1) comprises a compass (6), and the control device (2) is configured also to carry out, while taking into account measured values of the compass (6), a function which assists the driver in driving the vehicle (8).

12. Mobile phone (1) according to one of the preceding claims,
**characterized in that**
the control device (2) is configured to infer a state of a road on which the vehicle (8) is being driven, as a function of the measured values of the acceleration sensor (4).

13. Mobile phone (1) according to one of the preceding claims,
**characterized in that**
the mobile phone (1) has a communication interface (7), in particular for the wireless transmission of data, and the control device (2) is configured to transmit control data via the communication interface (7) to a vehicle-internal data transmission system (15) and/or directly to at least one component (11, 16, 19, 22, 26, 27, 29, 31) of the vehicle and/or to receive information data from the vehicle-internal data transmission system (15) and/or directly from at least one component (11, 16, 19, 22, 26, 27, 29, 31) of the vehicle (8).

14. Mobile phone (1) according to Claim 13,
**characterized in that**
the control device (2) is configured to transmit control data directly and/or via the vehicle-internal data transmission system (15) to a lighting device (11, 12, 13) of the vehicle (8) and as a result to actuate the lighting device (11, 12, 13), said control data being generated as a function of the measured values of the acceleration sensor (4).

15. Mobile phone (1) according to Claim 13 or 14,
**characterized in that**
the control device (2) is configured to transmit control data directly and/or via the vehicle-internal data transmission system (15) to a display device (22, 23) of the vehicle (8) and as a result to actuate the display device (22, 23), said control data being generated as a function of the measured values of the acceleration sensor (4).

16. Mobile phone (1) according to one of Claims 13 to 15,
**characterized in that**
the control device (2) is configured to transmit control data directly and/or via the vehicle-internal data transmission system (15) to a camera (25, 27) of the vehicle, in particular a front-mounted camera (25) positioned behind a windscreen (9) and/or a camera (27) which is arranged on an outer surface of the vehicle (8) and as a result to actuate the camera (25, 27), said control data being generated as a function of the measured values of the acceleration sensor (4).

17. Driver assistance system having a mobile phone (1) according to one of the preceding claims.

18. Method for assisting a driver in driving a vehicle (8) with the aid of a mobile phone (1), having the steps:
- measurement of an acceleration of the mobile phone (1) by means of an acceleration sensor (4) of the mobile phone (1), and
- execution of a function, which assists the driver in driving the vehicle (8), by means of a control device (2) of the mobile phone (1) on the basis of measured values for the acceleration by actuating a component of the vehicle (8).

## Revendications

1. Téléphone mobile (1) comprenant un dispositif de commande (2) conçu pour exécuter une fonction destinée à aider un conducteur dans la conduite d'un véhicule (8),
**caractérisé par** un capteur d'accélération (4) conçu pour mesurer l'accélération du téléphone mobile (1) et pour transmettre des valeurs de mesure de l'accélération au dispositif de commande (2), dans lequel le dispositif de commande (2) est conçu pour mettre en oeuvre ladite fonction en fonction des valeurs de mesure de l'accélération par commande d'un composant du véhicule (8).

2. Téléphone mobile (1) selon la revendication 1,
**caractérisé en ce que** le dispositif de commande (2) est conçu pour déterminer un comportement de conduite du conducteur et pour informer le conducteur de son comportement de conduite en fonction des valeurs de mesure du capteur d'accélération (4).

3. Téléphone mobile (1) selon la revendication 2,
**caractérisé en ce que** le dispositif de commande (2) est conçu pour modifier la coloration d'un éclairage, en particulier d'un rétroéclairage, d'un dispositif d'affichage (3) du téléphone mobile (1) en fonction du comportement de conduite du conducteur.

4. Téléphone mobile (1) selon l'une des revendications précédentes,
**caractérisé en ce que** le dispositif de commande (2) est conçu pour déterminer une orientation dans l'espace du téléphone mobile (1) en fonction des valeurs de mesure du capteur d'accélération (4).

5. Téléphone mobile (1) selon l'une des revendications précédentes,
**caractérisé en ce que** le dispositif de commande (2) est conçu pour déterminer une charge du véhicule (8) et/ou une répartition de la charge dans le véhicule (8) et pour informer le conducteur de la charge et/ou de la répartition de la charge en fonction des valeurs de mesure du capteur d'accélération (4).

6. Téléphone mobile (1) selon l'une des revendications précédentes,
**caractérisé en ce que** le dispositif de commande (2) est conçu pour déterminer un degré de concentration du conducteur en fonction des valeurs de mesure du capteur d'accélération (4).

7. Téléphone mobile (1) selon l'une des revendications précédentes,
**caractérisé en ce que** le dispositif de commande (2) est conçu pour déterminer une vitesse du téléphone mobile (1) en fonction des valeurs de mesure du capteur d'accélération (4).

8. Téléphone mobile (1) selon l'une des revendications précédentes,
**caractérisé en ce que** le dispositif de commande (2) est conçu pour détecter une opération de stationnement imminente du véhicule (1) et pour aider le conducteur à effectuer l'opération de stationnement après la détection d'une opération de stationnement imminente, en fonction des valeurs de mesure du capteur d'accélération (4).

9. Téléphone mobile (1) selon l'une des revendications précédentes,
**caractérisé en ce que** le téléphone mobile (1) comporte une interface de communication (7) destinée à la transmission de données sans fil et **en ce que** le dispositif de commande (2) est conçu pour transmettre par l'intermédiaire de l'interface de communication (7) des données comportant des valeurs de mesure du capteur d'accélération (4).

10. Téléphone mobile (1) selon l'une des revendications précédentes,
**caractérisé en ce que** le téléphone mobile (1) comprend un système de navigation (5) et **en ce que** le dispositif de commande (2) est conçu pour exécuter une fonction qui aide le conducteur dans la conduite du véhicule (8), en tenant également compte des données du système de navigation (5).

11. Téléphone mobile (1) selon l'une des revendications précédentes,
**caractérisé en ce que** le téléphone mobile (1) comprend une boussole (6) et **en ce que** le dispositif de commande (2) est conçu pour exécuter une fonction qui aide le conducteur dans la conduite du véhicule (8), en tenant également compte des valeurs de mesure de la boussole (6) .

12. Téléphone mobile (1) selon l'une des revendications précédentes,
**caractérisé en ce que** le dispositif de commande (2) est conçu pour indiquer un état d'une route sur laquelle le véhicule (8) est conduit en fonction des valeurs de mesure du capteur d'accélération (4).

13. Téléphone mobile (1) selon l'une des revendications précédentes,
**caractérisé en ce que** le téléphone mobile (1) comporte une interface de communication (7), en particulier pour la transmission de données sans fil, et **en ce que** le dispositif de commande (2) est conçu pour transmettre des données de commande par l'intermédiaire de l'interface de communication (7) à un système de transmission de données embarqué (15) et/ou directement à au moins un composant (11, 16, 19, 22, 26, 27, 29, 31) du véhicule et/ou pour recevoir des données d'information en provenance du système de transmission de données embarqué (15) et/ou directement en provenance d'au moins un composant (11, 16, 19, 22, 26, 27, 29, 31) du véhicule (8).

14. Téléphone mobile (1) selon la revendication 13,
**caractérisé en ce que** le dispositif de commande (2) est conçu pour transmettre des données de commande générées en fonction des valeurs de mesure du capteur d'accélération (4) directement et/ou par l'intermédiaire du système de transmission de données embarqué (15) à un dispositif d'éclairage (11, 12, 13) du véhicule (8) et pour ainsi commander le dispositif d'éclairage (11, 12, 13).

15. Téléphone mobile (1) selon la revendication 13 ou 14,
**caractérisé en ce que** le dispositif de commande (2) est conçu pour transmettre des données de commande générées en fonction des valeurs de mesure du capteur d'accélération (4) directement et/ou par l'intermédiaire du système de transmission de données embarqué (15) à un dispositif d'affichage (22, 23) du véhicule (8) et pour ainsi commander le dispositif d'affichage (22, 23).

16. Téléphone mobile (1) selon l'une des revendications 13 à 15,
**caractérisé en ce que** le dispositif de commande (2) est conçu pour transmettre des données de commande générées en fonction des valeurs de mesure du capteur d'accélération (4) directement et/ou par l'intermédiaire du système de transmission de données embarqué (15) à une caméra (25, 27) du véhicule, en particulier une caméra avant (25) placée derrière un pare-brise (9) et/ou une caméra (27) disposée sur une surface extérieure du véhicule (8), et pour ainsi commander la caméra (25, 27).

17. Système d'assistance à la conduite comportant un téléphone mobile (1) selon l'une des revendications précédentes.

18. Procédé pour aider un conducteur dans la conduite d'un véhicule (8) à l'aide d'un téléphone mobile (1), comprenant les étapes consistant à :
- mesurer l'accélération du téléphone mobile (1) au moyen d'un capteur d'accélération (4) du téléphone mobile (1) et
- exécuter une fonction destinée à aider le conducteur dans la conduite du véhicule (8) au moyen d'un dispositif de commande (2) du téléphone mobile (1) sur la base de valeurs de mesure de l'accélération par commande d'un composant du véhicule (8).
